# EUROPEAN PATENT APPLICATION

(11) **EP 4 811 635 A1**
(43) Date of publication of application: **23.09.2026**
(21) Application number: 26164815.8
(22) Date of filing: 13.03.2026
(51) Int. Cl.: H02M 1/32, H02M 1/36, H02M 5/458, H02M 7/217, H02M 7/06

(54) **IN-RUSH CURRENT LIMITER**

(30) Priority: 17.03.2025 US 202519081524
(71) Applicant: Belimo Holding AG, 8340 Hinwil ZH (CH)
(72) Inventor: Wildhaber, Stefan, 8732 Neuhaus (CH)
(74) Representative: Belimo IP Department

(57) **Abstract**

An apparatus (102), an actuator device (103) incorporating the apparatus (102), and a corresponding method of controlling a motor (106) are described. The apparatus (102) comprises a rectifier (124), a low-pass filter, LPF, (126), and a circuit (120) for limiting inrush current. The circuit (120) passes a half-wave output (214, 306) from the rectifier (124) through one of a plurality of resistance paths based on the current of the half-wave output. In one embodiment, the rectifier (124) has first and second input interfaces for separate input signals (204, 206). In another embodiment, the rectifier (124) has a single input interface and is configured to convert positive and negative voltage levels of an input signal into first and second half-wave outputs which are passed through respective sets of resistance paths. A charge pump (402) may be included.

## Description

### FIELD

This disclosure is directed to power supplies, such as power supplies for driving an actuator circuit, that include an in-rush current limiter circuit.

### BACKGROUND

In a heating, ventilating and air conditioning (HVAC) system, valves can be controlled for regulating the flow of fluid within a fluid circuit of the HVAC system. The flow of fluid such as water or air can be regulated to adjust the amount of energy delivered by a heat exchanger to heat or cool a room in a building or the amount of energy drawn by a chiller for cooling purposes. The fluid transport through the fluid circuit can be driven by one or more flow generators such as pumps or ventilators, but the flow can be regulated by varying the opening or position of the valves or the damper by way of actuators in an actuator circuit. In the case of air, damper actuators in actuator circuits can control the air flow in a flow channel. A power supply can convert an input alternating current (AC) power into a direct current (DC) power to be used for operating the actuator circuit to control the valve for regulating the flow.

### SUMMARY

In one embodiment, an apparatus in a heating, ventilating, and air conditioning (HVAC) system is generally described. The apparatus can include a rectifier. The rectifier can include a first input interface configured to receive a first input signal and a second input interface configured to receive a second input signal. The apparatus can further include a half-wave path configured to convert one of the first input signal and the second input signal into a half-wave output. The apparatus can further include a low-pass filter (LPF). The apparatus can further include a circuit connected between a rectifier in the power supply and the LPF. The circuit can include a plurality of resistance paths. The circuit can be configured to receive the half-wave output from the rectifier. The circuit can be further configured to, based on a current of the half-wave output, pass the half-wave output through one of the plurality of resistance paths.

In one embodiment, an actuator device in a heating, ventilating, and air conditioning (HVAC) system is generally described. The actuator device can include a motor, an actuator circuit and a power supply. The actuator circuit can be configured to control the motor to drive an actuated part of the HVAC system. The power supply can be configured to supply power to the actuator circuit. The power supply can include a rectifier including a first input interface configured to receive a first input signal and a second input interface configured to receive a second input signal. The power supply can further include a half-wave path configured to convert one of the first input signal and the second input signal into a half-wave output. The power supply can further include a low-pass filter (LPF). The power supply can further include a circuit connected between the rectifier and the LPF. The circuit can include a plurality of resistance paths. The circuit can be configured to receive the half-wave output from the rectifier. The circuit can be further configured to, based on a current of the half-wave output, pass the half-wave output through one of the plurality of resistance paths.

In one embodiment, an actuator device in a heating, ventilating, and air conditioning (HVAC) system is generally described. The actuator device can include a motor, an actuator circuit and a power supply. The actuator circuit can be configured to control the motor to drive an actuated part of the HVAC system. The power supply can be configured to supply power to the actuator circuit. The power supply can include a rectifier including an input interface configured to receive an input signal. The power supply can further include a half-wave path configured to convert the input signal into a half-wave output. The power supply can further include a low-pass filter (LPF). The power supply can further include a circuit connected between the rectifier and the LPF. The circuit can include a plurality of resistance paths. The circuit can be configured to receive the half-wave output from the rectifier. The circuit can be further configured to, based on a current of the half-wave output, pass the half-wave output through one of the plurality of resistance paths.

The foregoing summary is illustrative only and is not intended to be in any way limiting. In addition to the illustrative aspects, embodiments, and features described above, further aspects, embodiments, and features will become apparent by reference to the drawings and the following detailed description. In the drawings, like reference numbers indicate identical or functionally similar elements.

### BRIEF DESCRIPTION OF THE DRAWINGS

FIG. 1A illustrates an example system implemented with an in-rush current limiter circuit in one embodiment.
FIG. 1B illustrates an example power supply that includes an in-rush current limiter circuit in one embodiment.
FIG. 2A illustrates another example implementation of an in-rush current limiter circuit in one embodiment.
FIG. 2B illustrates another example implementation of in-rush current limiter circuit in one embodiment.
FIG. 3A illustrates another example implementation of in-rush current limiter circuit in one embodiment.
FIG. 3B illustrates another example implementation of in-rush current limiter circuit in one embodiment.
FIG. 4 illustrates another example implementation of in-rush current limiter circuit in one embodiment.
FIG. 5A illustrates an example application that utilizes in-rush current limiter circuit in one embodiment.
FIG. 5B illustrates another example application that utilizes in-rush current limiter circuit in one embodiment.
FIG. 6 illustrates a process that implements in-rush current limiter circuit in one embodiment.
FIG. 7 illustrates a process that implements in-rush current limiter circuit in one embodiment.

### DETAILED DESCRIPTION

In the following description, numerous specific details are set forth, such as particular structures, components, materials, dimensions, processing steps and techniques, in order to provide an understanding of the various embodiments of the present application. However, it will be appreciated by one of ordinary skill in the art that the various embodiments of the present application may be practiced without these specific details. In other instances, well-known structures or processing steps have not been described in detail in order to avoid obscuring the present application.

### Example System

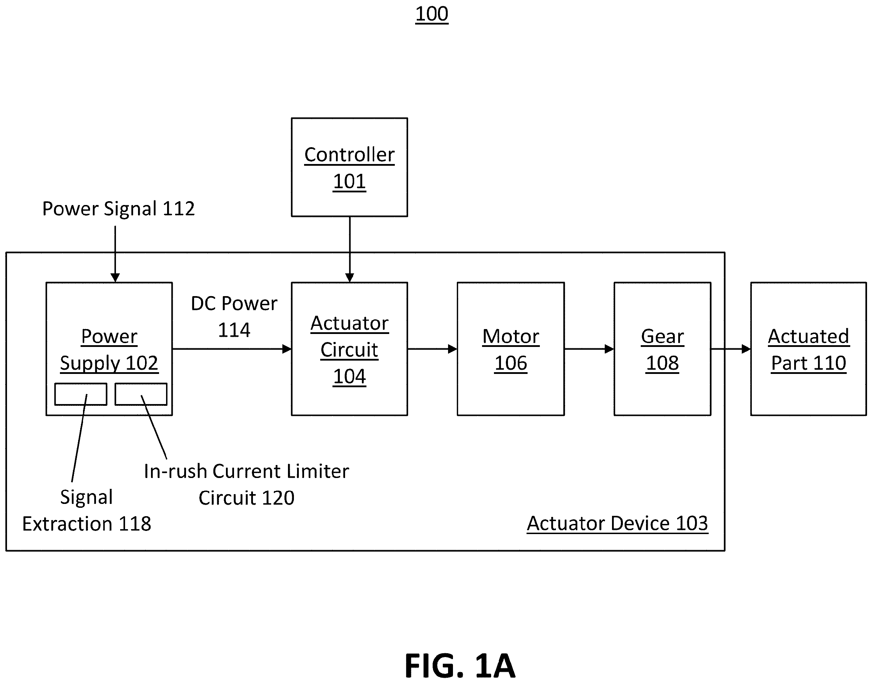

FIG. 1A illustrates an example system implemented with an in-rush current limiter circuit in one embodiment. System 100 can be an HVAC system that includes a controller 101 and an actuator device 103. Actuator device 103 can include a power supply 102, an actuator circuit 104, a motor 106, a gear 108, an actuated part 110 and other components such as application specific integrated circuits (ASICs), motor gears, mounting interfaces, etc. Controller 101 can be a microcontroller configured to generate control signals for controlling actuator device 103. Actuator device 103 can be controlled by controller 101 to drive movements of actuated part 110. Actuator circuit 104 can be a motor application specific integrated circuit (ASIC) that receives control signals from controller 101 for controlling motor 106. Motor 106 can be an electric motor, such as a brushless DC motor, configured to drive movements of gear 108. Actuated part 110 can be a damper or valve controlled by movement of gear 108. Actuated part 110 can be actuated by actuator device 103 to control flow of a fluid in system 100. The fluid may be a liquid (e.g., water, glycol mixtures, refrigerants, mineral oils, or other chemicals, mixtures, or emulsions with a fixed volume) or a gas (e.g., air or other substance with no fixed volume).

Power supply 102 can receive a power signal 112. When power signal 112 is an analog power signal, power supply 102 can convert power signal 112 into DC power labeled as DC power 114. When power signal 112 is DC power signal, power supply 102 can forward power signal 112 as DC power 114. DC power 114 can be used for operating actuator circuit 104. Power supply 102 can include a rectifier (described below) that performs the conversion from AC power to DC power, or to forward DC power signals. Power signal 112 can have a specific voltage, such as 24Volts (V), or 230V, or other levels of VAC. Motor 106 can be supplied by power supply 102 via actuator circuit 104. Power supply 102 can also supply controller 101 and other components in system 100.

In one embodiment, power supply 102 can include a signal extraction circuit 118 configured to detect whether power signal 112 is being supplied to one or more inputs of the rectifier in power supply 102. Signal extraction circuit 118 can be connected to the inputs of the rectifier in power supply 102 and also connected to actuator circuit 104. Signal extraction circuit 118 can be configured to detect the presence of power signals being applied to one or more inputs of the rectifier in power supply 102, and generate signals to indicate the detected presence. In one embodiment, signal extraction circuit 118 can also be configured to provide a signal representing a desired rotation direction of actuated part 110 to actuator circuit 104.

In an aspect, when system 100 implements a low-power HVAC field device (e.g., up to 10 Watts (W)) and when power supply 102 is a single-phase AC power supply (e.g., 24V or 230V), power supply 102 can include passive single-phase rectifier circuits such as half-wave rectifier or full-wave rectifier circuits. The smoothing capacitors in such passive single-phase rectifier circuits can draw significant in-rush currents from power signal 112 during power on, in particular during the first half AC cycle and can subject the components in line with the smoothing capacitor to excessive currents (e.g., in-rush currents).

Industry standards can define limits for the in-rush current. Also, users of the HVAC systems can also request limits on in-rush currents. To limit in-rush currents, conventional HVAC systems utilize fixed resistors to limit in-rush currents. Other types of systems can utilize Negative Temperature Coefficient (NTC) thermistors to limit in-rush currents. However, such components for limiting in-rush currents can permanently consume power during normal operations of the system.

Other conventional techniques that are being used in non-HVAC systems to detect in-rush current include comparing the input voltage with the output voltage and regulating the input using a current control loop. However, such techniques require a comparator which can occupy additional circuit board space. Some other conventional techniques also include using a triggering circuit to short a resistor to ground to limit in-rush current, but the triggering circuit and resistor also take up relatively more circuit board space.

According to various embodiment described in the present disclosure, power supply 102 can include an in-rush current limiter circuit 120 (hereinafter "circuit 120") configured to limit in-rush current, such as excess current being drawn by smoothing capacitors in power supply 102. In one embodiment, circuit 120 can include a current limiting switch to switch between: 1) a low-resistance current path if the current is below a current limit threshold; and 2) a high-resistance current path if the current is above the current limit threshold. The current limit threshold can be based on the current limiting switch and various resistive elements in circuit 120. Also, depending on the voltage level of power signal 112, circuit 120 can perform in-rush current limiting on one or more of the positive half-wave path and the negative half-wave path of the rectifier in power supply 102. Further, the current limit threshold described herein can be dependent on threshold current and/or voltages of switches in the current limiter circuit 120, thus additional hardware components, such as comparators and/or feedback loops, are not needed for detecting and limiting in-rush current.

In another embodiment, the current limiting switch in circuit 120 can cause circuit 120 to switch between a plurality (e.g., two or more) resistance paths to limit in-rush current based on the instantaneous in-rush current being experienced by power supply 102. The plurality of resistance paths can include the low-resistance current path, the high-resistance current path, and one or more intermediate current paths. The intermediate current paths can provide a resistance that is between the resistances being provided by the low-resistance path and the high-resistance path. As the current being drawn from power 112 signal increases, the amount of current limiting (or resistance) being provided by the paths in circuit 120 can also increase.

### Example Power Supply

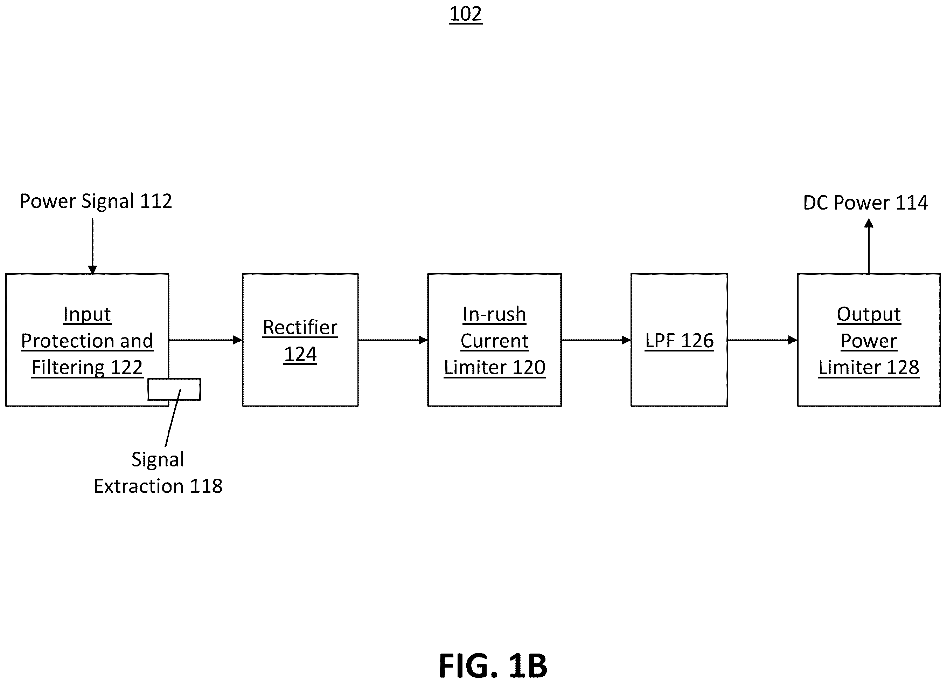

FIG. 1B illustrates details of an apparatus implementing power supply 102 that includes circuit 120 that limits in-rush current. Power supply 102 can include a rectifier 124, circuit 120 and a low-pass filter (LPF) 126. In the embodiment shown in FIG. 1B, power supply 102 can also include an input protection and filtering circuit 122 and an output power limiter circuit 128. In some implementations, output power limiter circuit 128 can be an optional component, such as for implementations where DC power 114 is subject to predefined limits (e.g., an industry standard limit).

Input protection and filtering circuit 122 can include components, such as a network of resistors, diodes and capacitors, that provide impedance and filtering to incoming current of AC power 112 to protect components in power supply 102 from undesired current surge. The filter provided by input protection and filtering circuit 122 can round off the corners of strong incoming currents and reduces the radiated interference created by the strong incoming currents. Signal extraction circuit 118 can be a part of input protection and filtering circuit 122 or can be situated between input protection and filtering circuit 122 and rectifier 124.

In one embodiment, rectifier 124 can be implemented by passive single-phase rectifier circuits such as half-wave rectifier or full-wave rectifier circuits. Rectifier 124 can be configured to receive power signal 112 and convert power signal 112 into DC power 114. LPF 126 can include components such as inductors and smoothing capacitors. Without activating circuit 120 to limit in-rush current, the smoothing capacitors in LPF 126 can draw significant in-rush currents during power on of actuator device 103. Circuit 120 can limit the in-rush current from one or more of a positive half-wave path of rectifier 124 and a negative half-wave path of rectifier 124.

### First Example implementation

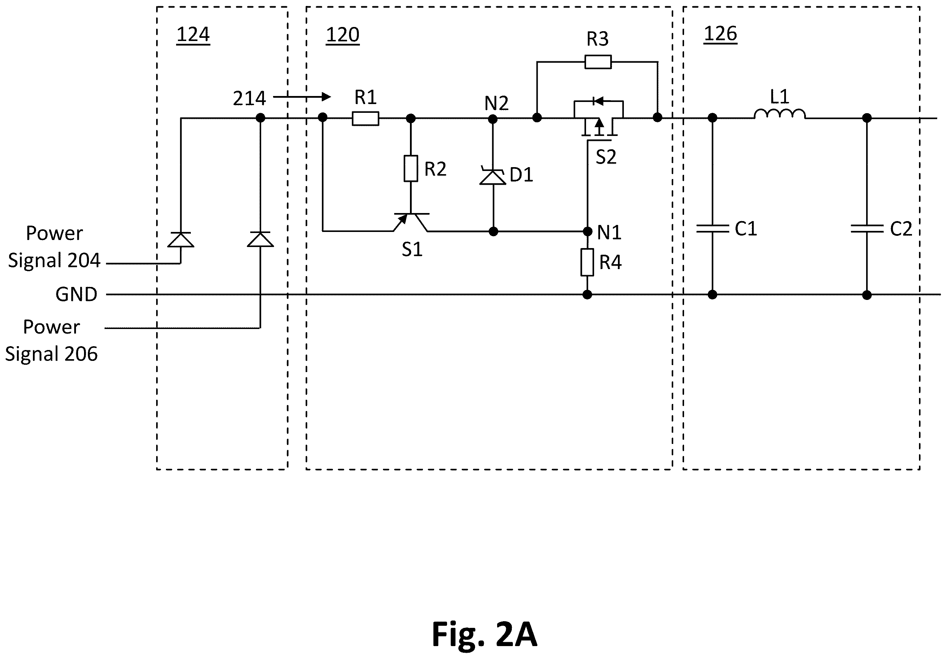

FIG. 2A illustrates an example implementation of an in-rush current limiter circuit in one embodiment. Descriptions of FIG. 2A may reference components that are shown in FIG. 1A and FIG. 1B. In the embodiment shown in FIG. 2A, when power supply 102 is a 4-watt power supply and power signal 112 is 24V, circuit 120 can limit the in-rush current from a positive half-wave path of rectifier 124. In the embodiment shown in FIG. 2A, rectifier 124 is a one-way rectifier that receives either a first power signal 204 or a second power signal 206. First power signal 204 and second power signal 206 can be received alternately as power signal 112. Further, first power signal 204 and second power signal 206 can have a common reference, such as ground reference GND. Rectifier 124 can operate in one half-cycle at a time, such as a positive half-cycle. When first power signal 204 is an AC power signal and is received by rectifier 124, rectifier 124 generates a half-wave output, labeled as signal 214, that is a rectified version (e.g., DC signal) of first power signal 204. When second power signal 206 is an AC power signal and is received by rectifier 124, rectifier 124 generates signal 214 that is a rectified version (e.g., DC signal) of second power signal 206. When first power signal 204 and second power signal 206 are DC signals, rectifier 124 can forward the received DC signal.

In one embodiment, the actuated part 110 can be a physical component that can be rotated in one of two directions - clockwise and counterclockwise. Signal extraction circuit 118 can be configured to detect the presence of first power signal 204 and/or second power signal 206 at the inputs of rectifier 124. When a presence of first power signal 204 is detected, signal extraction circuit 118 can generate a control signal to actuator device 103 to indicate a desired rotation in one direction (e.g., clockwise or counterclockwise). When a presence of second power signal 206 is detected, signal extraction circuit 118 can generate a control signal to actuator device 103 to indicate a desired rotation in another direction (e.g., counterclockwise or clockwise). When a presence of both first power signal 204 and second power signal are detected, signal extraction circuit 118 can generate a control signal to actuator device 103 to indicate a desired rotation in one direction (e.g., clockwise or counterclockwise).

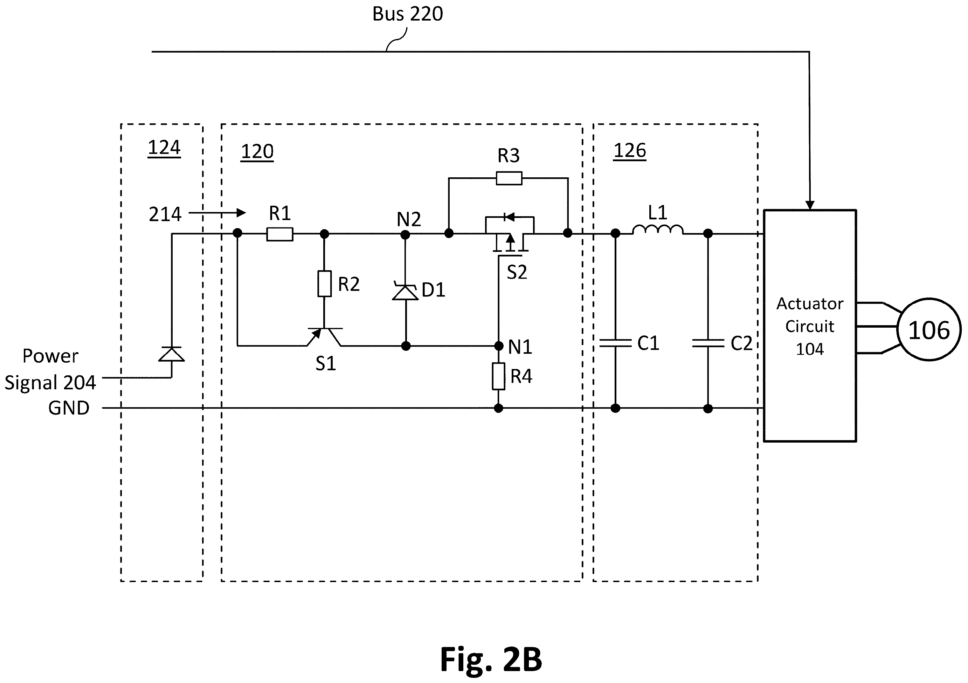

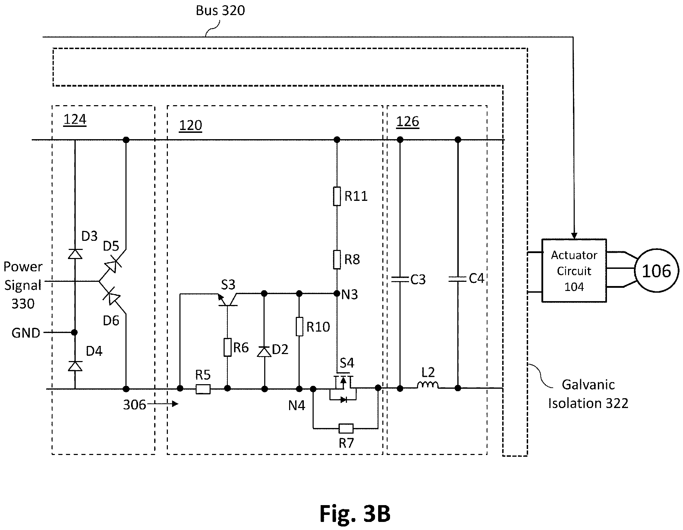

In another embodiment, the actuated part 110 is a physical component that can be rotated in clockwise or counterclockwise direction and rectifier 124 (or power supply 102) can have one input interface for receiving one power signal (e.g., one of the first power signal 204 and second power signal 206). Controller 101 (see Fig. 1A) can provide a control signal (which can be analog or digital signal) indicating a desired rotation direction (clockwise or counterclockwise) to actuator circuit 104. Actuator circuit 104 can use the control signal from controller 101, along with a signal provided by signal extraction circuit 118 indicating a presence of power signal being received by rectifier 124, to rotate actuated part 110 accordingly. In one or more embodiments, controller 101 can provide the control signals via a communication bus (e.g., see bus 220 in FIG. 2B and bus 320 in FIG. 3B), such as multipoint bus (MP-Bus), Building Automation and Control Networks (BACNET), MODBUS, KNX, , or indirectly via microcontrollers and physical network layers. Actuator circuit 104, which can be a motor control circuit, can use the signal 214 (which can be DC power 114 shown in Fig. 1A) along with the control signal from controller 101 to actuate (e.g., rotate) actuated part 110 in the direction indicated by the control signal.

Circuit 120 can receive signal 214 and can pass signal 214 to LPF 126 via one of a low resistance path or a high resistance path in circuit 120. Two switches S1, S2 in circuit 120 can control the current limiting on signal 214 from the positive half-wave path. Each one of switches S1, S2 can be implemented by a transistor. In various embodiments shown in the present disclosure, switch S1 is a current-controlled device such as bipolar junction transistor (BJT) and switch S2 is a voltage-controlled device such as a metal-oxide-semiconductor field-effect transistor (MOSFET), such as a P-type MOSFET. Other types of switches, such as insulated-gate bipolar transistors (IGBT), or devices of various technologies such as Silicon Carbide (SiC) or Gallium Nitride (GaN), can also implement switch S1 and/or switch S2.

A Zener diode D1 can limit the gate-source voltage of switch S2 to prevent damaging the switch S2 and to allow switch S2 to be turned on relatively faster. Further, Zener diode D1 can also limit the charge stored in the gate of switch S2 to ensure a fast response of circuit 120. A resistor R3 is connected to switch S2 in parallel. The dimensions (e.g., size) of resistor R3 can be dimensioned to limit the current to prevent damaging and/or overheating components in circuit 120. In one embodiment, resistor R3 can be a relatively large component when compared to other components in circuit 120 in order to handle prolonged repetitive loads and to limit high currents. One or more resistors, such as R4 shown in FIG. 2A, can be situated between a node N1 and GND for setting the gate of switch S2 to ground (the defined potential) in case switch S1 is not conducting, thus leading to keeping switch S2 in conductive mode. The combination of Zener diode D1 and R4 can implement a voltage divider for the gate-source voltage of switch S2 to put switch S2 into conducting mode by default.

A resistor R1 can serve as a shunt resistor for monitoring the current of signal 214 being inputted into circuit 120. The current of signal 214 can drive a base of switch S1. In one embodiment, switch S1 can be implemented by a current-controlled device such that switch S1 can be controlled by the current of signal 214. A resistor R2 can limit the current of signal 214 flowing towards the base of switch S1 to prevent damaging switch S1. Further, resistors R1 can be temperature dependent to compensate the temperature dependance of Silicon transistors (e.g., S1) or to achieve various other effects. The resistor R1 also could be a controllable, such as being implemented by a variable resistor, in order to limit the current of signal 214 to different levels, dependent on the operation situation, for improving power factor values. As the current of signal 214 increases, the impedance at switch S2 also increases and will limit the current of signal 214 when the current meets or reaches a predefined current limit threshold.

When the current of signal 214 does not meet or reach the predefined current limit threshold, signal 214 can be passed to LPF 126 via a low-resistance path from R1 to LPF 126 via both R3 and switch S2 that is turned on (e.g., fully turned on or fully conductive). When the current of signal 214 reaches the predefined current limit threshold, signal 214 can be passed to LPF 126 via a high-resistance path from R1 to LPF 126 via R3, where switch S2 can be either is turned off (non-conductive) or partially conductive (not fully turned off, but less conductive than the on state). In one embodiment, under a normal operation condition (e.g., outside of power-on conditions), the current of signal 214 can be below the predefined current limit threshold and switch S2 can remain in an on state to allow signal 214 to be passed to LPF 126 using the low resistance path. Further, the switch S2 can be normally turned on based on the implementation using a P-type MOSFET as switch S2. Under power-on condition, when the current of signal 214 increases to cause switch S1 to become conductive, the current from signal 214 can drive the voltage at the gate of switch S2 higher, to a level where switch S2 is either partially conducting or turned off. The predefined current limit threshold can be defined and dependent on characteristics of switch S2.

In one or more embodiments, the predefined current limit threshold can be predefined to be the threshold voltage to completely turn on switch S1 (e.g., amplification state, fully conductive), to completely turn off switch S1 (e.g., cut-off state, non-conductive), and/or to operate switch S1 in one or more intermediate states (e.g., saturation, partially conductive). The current limit threshold can be predefined by choosing resistors R1, R2 that has resistance values for defining the current limit threshold. The loss of energy resulting from the current limit via the high-resistance path can be divided differently between resistor R3 and switch S2 when current is being passed through the high-resistance path. This loss energy has a linear relationship with the capacitance to be charged in LPF 126, such as the capacitance of smoothing capacitors C1 and C2.

By way of example, the current of signal 214 can increase to a level that turns on switch S1, which causes the base emitter voltage of a switch S1 to become conductive. When the base emitter voltage of switch S1 is conductive, the potential at a node N1 between switches S1 and S2 rises to the source potential of switch S2 (or to the potential of node N2 between R1 and S2). When S1 is a BJT and S2 is a MOSFET, the node N1 is between a collector terminal of S1 and a gate of S2. Thus, when S1 becomes conductive, the potential at N1 can increase to a level that turns off the switch S2. When switch S2 is turned off, both resistor R3 and switch S2 can impede the current from signal 214, hence further limiting the current being passed to LPF 126 (when compared to S2 in an on state).

In another embodiment, partially conductive states of switch S2 can be utilized to form more than two resistance paths that can include the low-resistance path (e.g., R3 and fully on S2), the high-resistance path (e.g., R3 and fully off S2) and one or more intermediate resistance paths (e.g., R3 and partially conductive S2). As mentioned above, to form the low-resistance path, switch S1 is turned off in order for switch S2 to remain fully turned on, and to form the high-resistance path, switch S1 is turned on in order for switch S2 to the fully turned off. To form an intermediate resistance path, switch S1 can be turned on in order to increase the potential at a node N1 for triggering a transition of switch S2 from on to off without fully turning off switch S2. To prevent fully turning off switch S2 despite switch S1 being turned on, various components, such as variable resistors, can implement resistors R1 to control the potential at N1 for operating switch S2 in partially conductive states.

In another embodiment shown in FIG. 2B, the actuated part 110 is a physical component that can be rotated in clockwise or counterclockwise direction. Rectifier 124 (or power supply 102) can receive one power signal and controller 101 (see Fig. 1A) can provide a control signal (which can be an analog or digital signal) indicating a desired rotation direction (clockwise or counterclockwise) to actuator circuit 104. In one or more embodiments, controller 101 can provide the control signals via a communication bus, such as bus 220. Actuator circuit 104, which can be a motor control circuit, can use the signal 214 (which can be DC power 114 shown in Fig. 1A) along with the control signal received from bus 220 to actuate (e.g., rotate) actuated part 110, via motor 106, in the direction indicated by the control signal. In another embodiment, the single-input configuration for limiting in-rush current shown in FIG. 2B can also be used in sensors in HVAC systems that receives a single power input. Under such configuration for a sensor, the power supply 102 including circuit 120 will be within the sensor.

### Second Example implementation

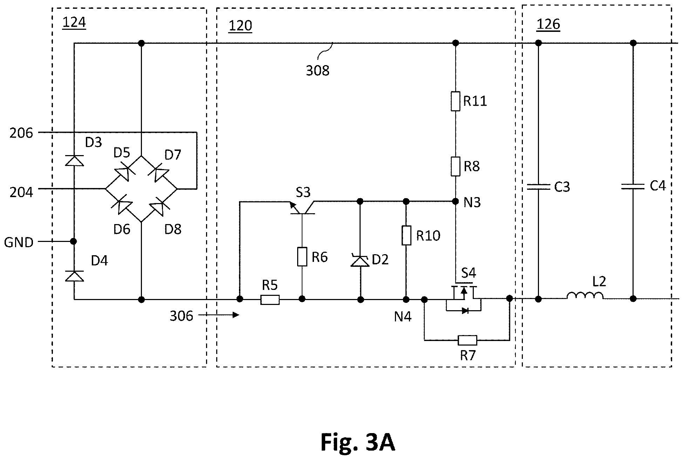

FIG. 3A and FIG. 3B illustrate other example implementations of an in-rush current limiter circuit in one embodiment. Descriptions of FIG. 3A and FIG. 3B may reference components that are shown in FIG. 1A to FIG. 2B. In the embodiment shown in FIG. 3A, when power supply 102 supports an input AC power 112 of 230V, circuit 120 can limit the in-rush current from a negative half-wave path of rectifier 124. A signal 306 can be outputted from the negative half-wave path of rectifier 124. Circuit 120 can receive signal 306 and can pass signal 306 to LPF 216 via one of a low resistance path or a high resistance path in circuit 120. Further, rectifier 124 shown in FIG. 3A can receive first power signal 204 and second power signal 206 alternately, or can receive both first power signal 204 and second power signal 206 simultaneously.

Two switches S3, S4 in circuit 120 can control the current limiting on signal 306 from the negative half-wave path. Each one of switches S3, S4 can be a transistor. In various embodiments shown in the present disclosure, switch S3 is a current-controlled device such as a BJT and switch S4 is a voltage-controlled device such as a MOSFET. Other types of switches, such as insulated-gate bipolar transistors (IGBT), or devices of various technologies such as Silicon Carbide (SiC) or Gallium Nitride (GaN), can also implement switch S3 and/or switch S4.

A Zener diode D2 can limit the gate source voltage of switch S4 to prevent damaging the switch S4. Further, Zener diode D2 can also limit the charge stored in the gate of switch S4 to ensure a fast response of circuit 120. A resistor R7 is connected to switch S4 in parallel. The dimensions (e.g., size) of resistor R7 can be dimensioned to limit the current to prevent damaging and/or overheating components in circuit 120. In one embodiment, resistor R7 can be a relatively large component when compared to other components in circuit 120 in order to handle prolonged repetitive loads and to limit high currents.

A resistor R5 can serve as a shunt resistor for monitoring the current of signal 306 being inputted into circuit 120. The current of signal 306 can drive a base of switch S3. A resistor R6 can limit the current of signal 306 flowing towards the gate of switch S3 to prevent damaging switch S3. As the current of signal 306 increases, the impedance at a switch S4 also increases and will limit the current of signal 306 when the current reaches a predefined current limit threshold.

One or more resistors can be situated between N3 and a positive rectified line voltage 308 for setting the gate of switch S4 up to the positive rectified line voltage 308. In one embodiment, the positive rectified line voltage 308 can reach up to 400VDC, thus two resisters R8 and R11 are arranged in series connection, with each one of R8 and R11 capable of holding up to 200V, in order for the overall configuration shown in FIG. 3A to hold up to 400V. Further, the combination of Zener diode D2 and resistors R8, R11 can implement a voltage divider for the gate-source voltage of switch S4 to prevent floating at the gate of switch S4. In one embodiment, when power supply 102 is not powered on (e.g., power interruption), the charge in C3, C4 can hold for a longer period of time and switch S4 may stay in fully conductive mode (e.g., fully on) and current limiting may not be triggered until the next power on. Under this condition, a resistor R10 in FIG. 3 can discharge the gate capacitance of switch S4 to keep switch S4 turned off initially such that current limitation can remain active during power interruption.

When the current of signal 306 does not reach the predefined current limit threshold, signal 306 can be passed to LPF 126 via a low-resistance path from R5 to LPF 126 via both R7 and switch S4 that is turned on. When the current of signal 306 reaches the predefined current limit threshold, signal 306 can be passed to LPF 126 via a high-resistance path from R5 to LPF 126 via R7, where switch S4 is turned off. In one embodiment, under a normal operation condition (e.g., outside of power-on conditions), the current of signal 306 can be below the predefined current limit threshold and switch S4 can remain in an on state to allow signal 306 to be passed to LPF 126 using the low resistance path. Further, the switch S4 can be normally turned on based on the implementation using a P-type MOSFET as switch S4. Under power-on condition, when the current of signal 306 increases to cause switch S3 to become conductive, the current from signal 306 can drive the voltage at the gate of switch S4 lower, to a level where switch S4 turns off. The predefined current limit threshold can be defined and dependent on characteristics of switch S4. In one embodiment, the predefined current limit threshold can be defined by the resistance value of R5 to turn on S3 at its threshold voltage (e.g., 0.6V), and also to turn off switch S4. The loss energy resulting from the current limit via the high-resistance path can be divided differently between resistor R7 and switch S4 when current is being passed through the high-resistance path. This loss of energy has a linear relationship with the capacitance to be charged in LPF 126, such as the capacitance of smoothing capacitors C3 and C4.

By way of example, the current of signal 306 can increase to a level that turns on switch S3, which causes the base emitter voltage of a switch S3 to become conductive. When the base emitter voltage of switch S3 is conductive, the potential at a node N3 between switches S3 and S4 drops to the source potential of switch S4 (or to the potential of node N4 between R5 and S4). Thus, when S3 becomes conductive, the potential at N3 can decrease to a level that turns off the switch S4. When switch S4 is turned off, both resistor R7 and switch S4 can impede the current from signal 306, hence further limiting the current being passed to LPF 126 (when compared to S4 in an on state).

In another embodiment, partially conductive states of switch S4 can be utilized to form more than two resistance paths that can include the low-resistance path (e.g., R7 and fully on S4), the high-resistance path (e.g., R7 and fully off S4) and one or more intermediate resistance paths (e.g., R7 and partially conductive S4). As mentioned above, to form the low-resistance path, switch S3 is turned off in order for switch S4 to remain fully turned on, and to form the high-resistance path, switch S3 is turned on in order for switch S4 to the fully turned off. To form an intermediate resistance path, switch S3 can be turned on in order to decrease the potential at a node N3 for triggering a transition of switch S4 from on to off without fully turning off switch S4. To prevent fully turning off switch S4 despite switch S3 being turned on, various components, such as variable resistors, can implement resistor R5 to control the potential at N3 for operating switch S4 in partially conductive states.

In another embodiment shown in FIG. 3B, when the actuated part 110 is a physical component that can be rotated in clockwise or counterclockwise direction. Rectifier 124 (or power supply 102) can receive one power signal and controller 101 (see Fig. 1A) can provide a control signal (which can be analog or digital signal) indicating a desired rotation direction (clockwise or counterclockwise) to actuator circuit 104. In the example shown in FIG. 3B, a galvanic isolation barrier 322 is situated between LPF 126 and actuator circuit 104. In one or more embodiments, controller 101 can provide the control signals via a communication bus, such as bus 320 (e.g., same as bus 220 in FIG. 2B). Actuator circuit 104, which can be a motor control circuit, can use the signal 306 (which can be DC power 114 shown in Fig. 1A) along with the control signal received from bus 320 to actuate (e.g., rotate) actuated part 110, via motor 106, in the direction indicated by the control signal.

### Third Example implementation

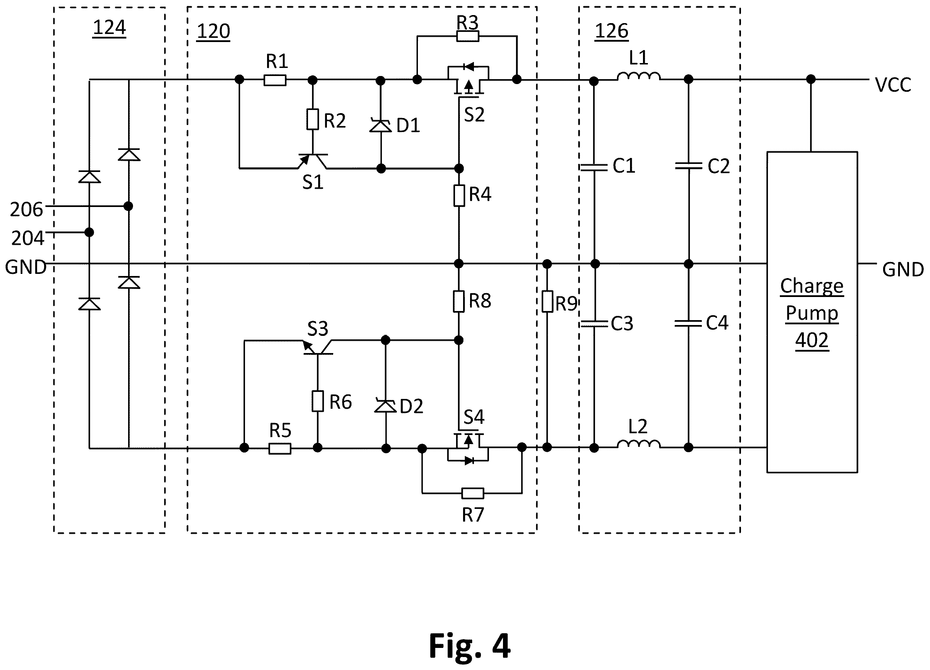

FIG. 4 illustrates another example implementation of an in-rush current limiter circuit in one embodiment. Descriptions of FIG. 4 may reference components that are shown in FIG. 1A to FIG. 3B. When power supply 102 is a 10-watt power supply that can support an input AC power 112 of 24V, circuit 120 can be a divided current limiter that limits the in-rush current from both the positive half-wave path and the negative half-wave path of rectifier 124. In the embodiment shown in FIG. 4, the components of circuit 120 and their functionality can be the same as those described in FIG. 2A, FIG. 2B, FIG. 3A, and FIG. 3B. In the embodiment shown in FIG. 4, rectifier 124 shown in FIG. 4 can receive first power signal 204 and second power signal 206 alternately, or at the same time, depending on the system and/or application utilizing power supply 102. Also, a resistor R9 is present in the embodiment shown in FIG. 4 for discharging C3 and C4, and the gate of switch S4, in cases where there may be insufficient load available. Also, if the load of VCC is neglectable, a resistor can be added in parallel with C1 to discharge C1, C2 and the gate of switch S2.

Further in the embodiment shown in FIG. 4, power supply 102 can further include a charge pump 402 connected between LPF 126 and the output of power supply 102 (or between LPF 126 and output power limiter circuit 128). Charge pump 402 can be configured to raise the energy of the output from the negative half-wave path of rectifier 124 to a positive level. The raise performed by charge pump 402 can improve the power factor of power supply 102 and can allow more power to be provided to actuator circuit 104 in a 24V operation without the need for overly large support capacitors.

### Example Applications

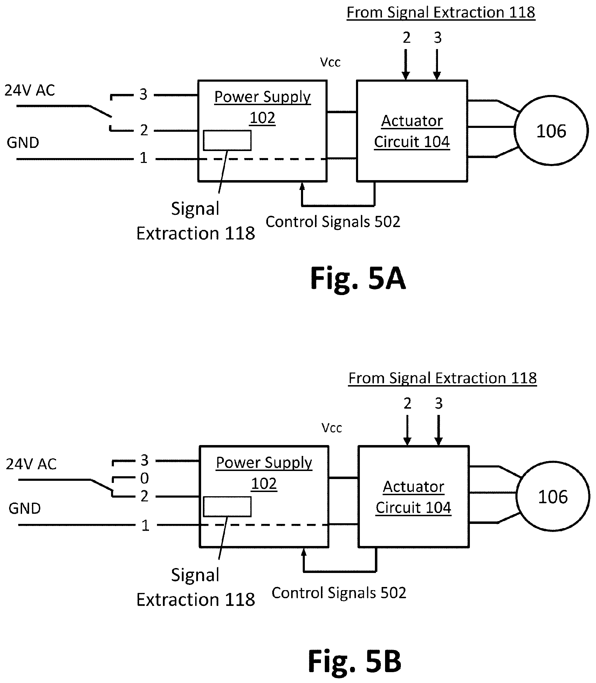

FIG. 5A and FIG. 5B illustrate example applications that can utilize in-rush current limiter circuit in one embodiment. Descriptions of FIG. 5A and FIG. 5B may reference components that are shown in FIG. 1A to FIG. 4. An open/close actuator is shown in FIG. 5A and a 3-point actuator is shown in FIG. 5B. During power on, the smoothing capacitors in power supply 102 can draw additional in-rush current, that may be undesirable, from AC power 112. In an aspect, when controller 101 provides control signals to operate or power on actuator circuit 104 to control motor 106 (e.g., to actuate, such as rotating, actuated part 110), the smoothing capacitors in power supply 102 can draw additional current from the power source (e.g., AC power 112) to accommodate the actuation.

Referring to FIG. 5A, the terminal with label "1" is the ground (GND) terminal of power supply 102. The terminals labeled with "2" and "3" are input terminals for receiving power signal 112 (AC or DC) , such as first power signal 204 and second power signal 206. In the example shown in FIG. 5A, a switch can be situated between a power source labeled as "24V AC" and the terminals "2" and "3". The switch can be operated to alternate connections between the terminals "2" and "3" or for connecting power supply 102 to both terminals "2" and "3". The ground GND serves as a common ground for the two inputs receiving power signals, such that additional signals for indicating rotation direction is not needed. The absence of an input terminal for receiving rotation direction can be useful when a feedback signal using the same common GND is provided by actuator circuit 104. The rotation direction of actuated part 110 can be dependent on which one of the terminals "2" and "3" receives a power signal. For example, receipt of a power signal on terminal "2" can control motor 106 to rotate actuated part 110 in one direction, receipt of a power signal on terminal "3" can control motor 106 to rotate actuated part 110 in another direction, absence of power signals on both terminals "2" and "3" can stop motor 106 (e.g., no rotation), and receipt of power signals on both terminals "2" and "3" can control motor 106 to rotate actuated part 110 in a prioritized direction that may be predefined. For example, terminal "2" can correspond to direction A, terminal "3" can correspond to direction B, and if the prioritized direction is predefined to be direction A, receipt of power signals at both terminals "2" and "3" can rotate actuated part 110 in direction A.

Referring to FIG. 5B, comparing to the open/close actuator, an additional terminal "0" is present in the 3-point actuator. The terminal "0" can be used for regulated actuation, such as rotating actuated part 110 to allow partial flow of air or liquid, instead of full flow, in an HVAC system. If the embodiment shown in FIG. 4 is utilized in power supply 102, for both open/close and 3-point actuators, the actuator circuit 104 can provide controls signals 502 to control charge pump 402. In one embodiment, signal extraction circuit 118 can detect whether one or more of terminals "2" and "3" received a power signal, and output signals to actuator circuit 104 to indicate the detection result such that actuator circuit 104 can control motor 106 to rotate actuated part 110 in a desired direction.

When power supply 102 with circuit 120 is utilized for actuators, such as those shown in FIG. 5A and FIG. 5B, an external power supply can be relieved by using smaller fuses since circuit 120 provides protection from in-rush current during power on and during switching. For example, when the actuator is turned off (power not connected to both "2" and "3"), powering on the actuator (connecting power to one of "2" and "3") can cause the smoothing capacitors in power supply 102 to draw excess current, resulting in presence of in-rush current.

### First Example Method

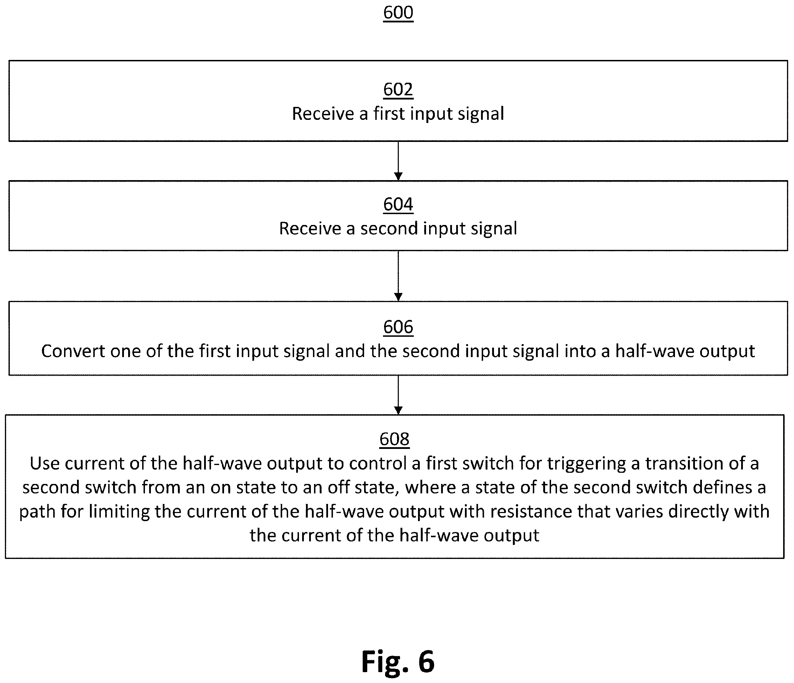

FIG. 6 illustrates a flowchart of an example process 500 that implements in-rush current limiter circuit in one embodiment. Descriptions of Fig. 6 may reference components shown in Figs. 1A-5B. The process 600 can include one or more operations, actions, or functions as illustrated by one or more of blocks 602, 604, 606 and 608. Although illustrated as discrete blocks, various blocks can be divided into additional blocks, combined into fewer blocks, eliminated, performed in different order, or performed in parallel, depending on the desired implementation.

Process 600 can be performed by an actuator device in a HVAC system, such as actuator device 103 of system 100 described in the present disclosure. Process 600 can begin at block 602. At block 602, a power supply in the actuator device can receive a first input signal.

Process 600 can proceed from block 602 to block 604. At block 604, the power supply of the actuator device can receive a second input signal.

Process 600 can proceed from block 604 to block 606. At block 606, the power supply of the actuator device can convert one of the first input signal and the second input signal into a half-wave output.

Process 600 can proceed from block 606 to block 608. At block 608, the power supply of the actuator device can use current of the half-wave output to control a first switch for triggering a transition of a second switch from an on state to an off state. A state of the second switch can define a path for limiting the current of the half-wave output with resistance that varies directly with the current of the half-wave output.

In one embodiment, the first input signal and the second input signal can be received alternately.

In one embodiment, the first input signal and the second input signal can be received simultaneously.

In one embodiment, the second switch can be connected in parallel with a resistor. The power supply of the actuator device can use the current of the half-wave output to turn on the first switch for triggering the transition of the second switch from the on state to the off state to form a high-resistance path with the resistor for passing the half-wave output, and can use the current of the half-wave output to turn off the first switch for triggering the transition of the second switch from the off state to the on state to form a low-resistance path with the resistor for passing the half-wave output.

In one embodiment, the transition of the second switch from the on state to the off state comprises transitioning from a fully on state to a fully off state and the transition of the second switch from the off state to the on state comprises transitioning from a fully off state to a fully on state.

In one embodiment, the transition of the second switch from the on state to the off state comprises transitioning from a fully on state to a partially on state and the transition of the second switch from the off state to the on state comprises transitioning from a partially on state to a fully on state.

In one embodiment, the transition of the second switch from the on state to the off state comprises at least one of: transitioning from a fully on state to a fully off state and transitioning from a fully on state to a partially on state, and the transition of the second switch from the off state to the on state comprises at least one of transitioning from a fully off state to a fully on state and transitioning from a partially on state to a fully on state.

In one embodiment, the power supply of the actuator device can pass the half-wave output to an actuator circuit for controlling an actuated part. The receipt of the first input signal indicates a control of the actuated part in a first motion, the receipt of the second input signal indicates a control of the actuated part in a second motion, and the receipt of the first input signal and receipt of the second input signal simultaneously indicates a control of the actuated part in a third motion.

In one embodiment, the actuated part is rotatable. The first motion can be a first rotation direction, the second motion can be a second rotation direction opposite from the first rotation direction, and the third motion can be one of the first rotation direction, the second rotation direction, and a stop of rotation.

### Second Example Method

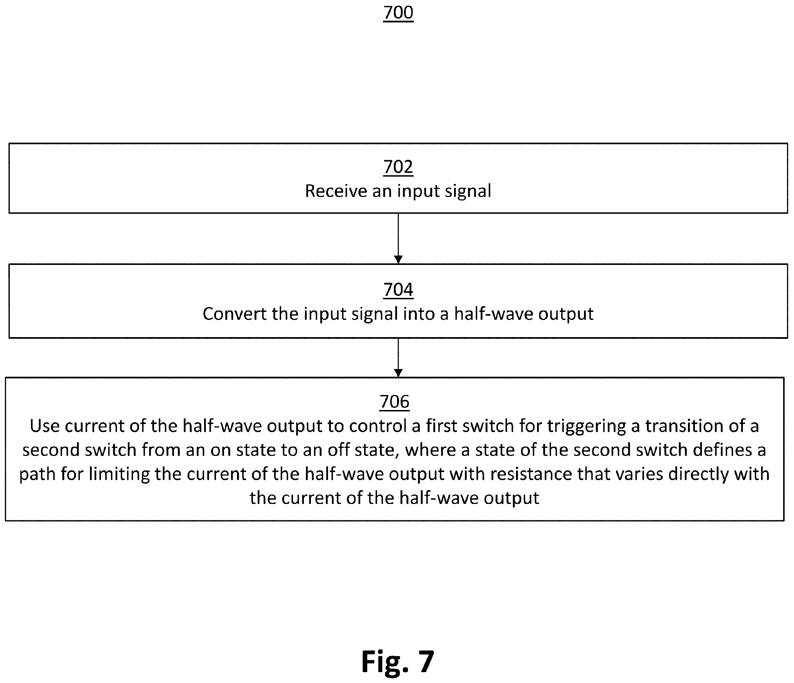

FIG. 7 illustrates a flowchart of an example process 500 that implements in-rush current limiter circuit in one embodiment. Descriptions of Fig. 7 may reference components shown in Figs. 1A-5B. The process 700 can include one or more operations, actions, or functions as illustrated by one or more of blocks 702, 704, and 706. Although illustrated as discrete blocks, various blocks can be divided into additional blocks, combined into fewer blocks, eliminated, performed in different order, or performed in parallel, depending on the desired implementation.

Process 700 can be performed by an actuator device in a HVAC system, such as actuator device 103 of system 100 described in the present disclosure. Process 700 can begin at block 702. At block 702, a power supply in the actuator device can receive an input signal.

Process 700 can proceed from block 702 to block 704. At block 704, the power supply of the actuator device can convert the input signal into a half-wave output.

Process 700 can proceed from block 704 to block 706. At block 706, the power supply of the actuator device can use current of the half-wave output to control a first switch for triggering a transition of a second switch from an on state to an off state. A state of the second switch can define a path for limiting the current of the half-wave output with resistance that varies directly with the current of the half-wave output.

In one embodiment, the second switch can be connected in parallel with a resistor. The power supply of the actuator device can use the current of the half-wave output to turn on the first switch for triggering the transition of the second switch from the on state to the off state to form a high-resistance path with the resistor for passing the half-wave output, and can use the current of the half-wave output to turn off the first switch for triggering the transition of the second switch from the off state to the on state to form a low-resistance path with the resistor for passing the half-wave output.

In one embodiment, the transition of the second switch from the on state to the off state comprises transitioning from a fully on state to a fully off state and the transition of the second switch from the off state to the on state comprises transitioning from a fully off state to a fully on state.

In one embodiment, the transition of the second switch from the on state to the off state comprises transitioning from a fully on state to a partially on state and the transition of the second switch from the off state to the on state comprises transitioning from a partially on state to a fully on state.

In one embodiment, the transition of the second switch from the on state to the off state comprises at least one of: transitioning from a fully on state to a fully off state and transitioning from a fully on state to a partially on state, and the transition of the second switch from the off state to the on state comprises at least one of transitioning from a fully off state to a fully on state and transitioning from a partially on state to a fully on state.

In one embodiment, the power supply of the actuator device can pass the half-wave output to an actuator circuit for controlling an actuated part. The receipt of the first input signal indicates a control of the actuated part in a first motion, the receipt of the second input signal indicates a control of the actuated part in a second motion, and the receipt of the first input signal and receipt of the second input signal simultaneously indicates a control of the actuated part in a third motion.

In one embodiment, the actuated part is rotatable. The first motion can be a first rotation direction, the second motion can be a second rotation direction opposite from the first rotation direction, and the third motion can be one of the first rotation direction, the second rotation direction, and a stop of rotation.

### Examples

Example 1: An apparatus comprising: a rectifier comprising: a first input interface configured to receive a first input signal; a second input interface configured to receive a second input signal; a half-wave path configured to convert one of the first input signal and the second input signal into a half-wave output; a low-pass filter (LPF); and a circuit connected between the rectifier and the LPF, wherein the circuit comprises a plurality of resistance paths, and the circuit is configured to: receive the half-wave output from the rectifier; and based on a current of the half-wave output, pass the half-wave output through one of the plurality of resistance paths.

Example 2: The apparatus of Example 1, wherein the first input signal and the second input signal are received alternately.

Example 3: The apparatus of any one of Examples 1 and 2, wherein the first input signal and the second input signal are received simultaneously.

Example 4: The apparatus of any one of Examples 1 to 3, wherein the circuit further comprises: a first switch being controlled by the current of the half-wave output from the rectifier; a resistor; and a second switch connected in parallel with the resistor, the second switch being controlled by a voltage at a node between a collector terminal of the first switch and a gate terminal of the second switch, wherein when the current of the half-wave output exceeds a predefined current threshold, the first switch is turned on to drive the voltage at the node to a voltage level that triggers a transition of the second switch from an on state to an off state.

Example 5: The apparatus of any one of Examples 1 to 4, wherein: when the second switch is fully turned on, the half-wave output is passed through a low-resistance path among the plurality of resistance paths; and when the second switch is fully turned off, the half-wave output is passed through a high-resistance path among the plurality of resistance paths.

Example 6: The apparatus of any one of Examples 1 to 5, wherein: when the second switch is fully turned on, the half-wave output is passed through a low-resistance path among the plurality of resistance paths; and when the second switch is partially turned on, the half-wave output is passed through a high-resistance path among the plurality of resistance paths.

Example 7: The apparatus of any one of Examples 1 to 6, wherein: when the second switch is fully turned on, the half-wave output is passed through a low-resistance path among the plurality of resistance paths; when the second switch is fully turned off, the half-wave output is passed through a high-resistance path among the plurality of resistance paths; and when the second switch is partially turned on, the half-wave output is passed through an intermediate resistance path among the plurality of resistance paths.

Example 8: The apparatus of any one of Examples 1 to 7, wherein: the half-wave path is a first half-wave path configured to convert a positive voltage level of the one of the first input and the second input signal into the half-wave output; the half-wave output is a first half-wave output; the rectifier further comprises a second half-wave path configured to convert a negative voltage level of the one of the first input and the second input signal into a second half-wave output; the plurality of resistance paths comprises a first set of resistance paths and a second set of resistance paths; and the circuit is configured to: receive the first half-wave output from the rectifier; receive the second half-wave output from the rectifier; based on a current of the first half-wave output, pass the first half-wave output through one of the first set of resistance paths; and based on a current of the second half-wave output, pass the second half-wave output through one of the second set of resistance paths.

Example 9: The apparatus of any one of Examples 1 to 8, further comprising a charge pump connected between the circuit and the LPF, wherein the charge pump is configured to raise an energy of a negative half-wave output, among the first and second half-wave outputs, to a positive potential.

Example 10: The apparatus of any one of Examples 1 to 9, wherein: the half-wave output is passed to an actuator circuit for controlling an actuated part; receipt of the first input signal at the first input interface indicates a control of the actuated part in a first motion; receipt of the second input signal at the second input interface indicates a control of the actuated part in a second motion; and receipt of the first input signal at the first input interface and receipt of the second input signal at the second input interface simultaneously indicates a control of the actuated part in a third motion.

Example 11: The apparatus of any one of Examples 1 to 10, wherein: the actuated part is rotatable; the first motion is a first rotation direction; the second motion is a second rotation direction opposite from the first rotation direction; and the third motion is one of: the first rotation direction; the second rotation direction; and a stop of rotation.

Example 12: An actuator device comprising: a motor; an actuator circuit configured to control the motor to drive an actuated part of a heating, ventilating, and air conditioning (HVAC) system; and a power supply configured to supply power to the actuator circuit, the power supply comprising: a rectifier including: a first input interface configured to receive a first input signal; a second input interface configured to receive a second input signal; a half-wave path configured to convert one of the first input signal and the second input signal into a half-wave output; a low-pass filter (LPF); and a circuit connected between the rectifier and the LPF, wherein the circuit comprises a plurality of resistance paths, and the circuit is configured to: receive the half-wave output from the rectifier; and based on a current of the half-wave output, pass the half-wave output through one of the plurality of resistance paths.

Example 13: The actuator device of Example 12, wherein the first input signal and the second input signal are received alternately.

Example 14: The actuator device of any one of Examples 12 and 13, wherein the first input signal and the second input signal are received simultaneously.

Example 15: The actuator device of any one of Examples 12 to 14, wherein the circuit further comprises: a first switch being controlled by the current of the half-wave output from the rectifier; resistor; and a second switch connected in parallel with the resistor, the second switch being controlled by a voltage at a node between a collector terminal of the first switch and a gate terminal of the second switch, wherein when the current of the half-wave output exceeds a predefined current threshold, the first switch is turned on to drive the voltage at the node to a voltage level that triggers a transition of the second switch from an on state to an off state.

Example 16: The actuator device of any one of Examples 12 to 15, wherein: when the second switch is fully turned on, the half-wave output is passed through a low-resistance path among the plurality of resistance paths; and when the second switch is fully turned off, the half-wave output is passed through a high-resistance path among the plurality of resistance paths.

Example 17: The actuator device of any one of Examples 12 to 16, wherein: when the second switch is fully turned on, the half-wave output is passed through a low-resistance path among the plurality of resistance paths; and when the second switch is partially turned on, the half-wave output is passed through a high-resistance path among the plurality of resistance paths.

Example 18: The actuator device of any one of Examples 12 to 17, wherein: when the second switch is fully turned on, the half-wave output is passed through a low-resistance path among the plurality of resistance paths; when the second switch is fully turned off, the half-wave output is passed through a high-resistance path among the plurality of resistance paths; and when the second switch is partially turned on, the half-wave output is passed through an intermediate resistance path among the plurality of resistance paths.

Example 19: The actuator device of any one of Examples 12 to 18, wherein: the half-wave path is a first half-wave path configured to convert a positive voltage level of the one of the first input and the second input signal into the half-wave output; the half-wave output is a first half-wave output; the rectifier further comprises a second half-wave path configured to convert a negative voltage level of the one of the first input and the second input signal into a second half-wave output; the plurality of resistance paths comprises a first set of resistance paths and a second set of resistance paths; and the circuit is configured to: receive the first half-wave output from the rectifier; receive the second half-wave output from the rectifier; based on a current of the first half-wave output, pass the first half-wave output through one of the first set of resistance paths; and based on a current of the second half-wave output, pass the second half-wave output through one of the second set of resistance paths.

Example 20: The actuator device of any one of Examples 12 to 19, further comprising a charge pump connected between the circuit and the LPF, wherein the charge pump is configured to raise an energy of a negative half-wave output, among the first and second half-wave outputs, to a positive potential.

Example 21: The actuator device of any one of Examples 12 to 20, wherein: the half-wave output is passed to the actuator circuit for controlling the motor to drive the actuated part; receipt of the first input signal at the first input interface indicates a control of the actuated part in a first motion; receipt of the second input signal at the second input interface indicates a control of the actuated part in a second motion; and receipt of the first input signal at the first input interface and receipt of the second input signal at the second input interface simultaneously indicates a control of the actuated part in a third motion.

Example 22: The actuator device of any one of Examples 12 to 21, wherein: the actuated part is rotatable; the first motion is a first rotation direction; the second motion is a second rotation direction opposite from the first rotation direction; and the third motion is one of: the first rotation direction; the second rotation direction; and a stop of rotation.

Example 23: An actuator device comprising: a motor; an actuator circuit configured to control the motor to drive an actuated part of a heating, ventilating, and air conditioning (HVAC) system; and a power supply configured to supply power to the actuator circuit, the power supply comprising: a rectifier including an input interface configured to receive an input signal; a half-wave path configured to convert the input signal into a half-wave output; a low-pass filter (LPF); and a circuit connected between the rectifier and the LPF, wherein the circuit comprises a plurality of resistance paths, and the circuit is configured to: receive the half-wave output from the rectifier; and based on a current of the half-wave output, pass the half-wave output through one of the plurality of resistance paths.

Example 24: The actuator device of Example 23, wherein the circuit further comprises: a first switch being controlled by the current of the half-wave output from the rectifier; a resistor; and a second switch connected in parallel with the resistor, the second switch being controlled by a voltage at a node between a collector terminal of the first switch and a gate terminal of the second switch, wherein when the current of the half-wave output exceeds a predefined current threshold, the first switch is turned on to drive the voltage at the node to a voltage level that triggers a transition of the second switch from an on state to an off state.

Example 25: The actuator device of any one of Examples 23 to 24, wherein: when the second switch is fully turned on, the half-wave output is passed through a low-resistance path among the plurality of resistance paths; and when the second switch is in one of a fully turned off state and a partially turned on state, the half-wave output is passed through a high-resistance path among the plurality of resistance paths.

Example 26: The actuator device of any one of Examples 23 to 25, wherein: when the second switch is fully turned on, the half-wave output is passed through a low-resistance path among the plurality of resistance paths; when the second switch is fully turned off, the half-wave output is passed through a high-resistance path among the plurality of resistance paths; and when the second switch is partially turned on, the half-wave output is passed through an intermediate resistance path among the plurality of resistance paths.

Example 27: The actuator device of any one of Examples 23 to 26, wherein: the half-wave output is passed to the actuator circuit for controlling the motor to drive the actuated part; and the actuator circuit is configured to receive a control signal from an external controller, wherein the control signal indicates a control of the actuated part in one of a first motion, a second motion and a third motion.

Example 28: The actuator device of any one of Examples 23 to 27, wherein: the actuated part is rotatable; the first motion is a first rotation direction; the second motion is a second rotation direction opposite from the first rotation direction; and the third motion is one of: the first rotation direction; the second rotation direction; and a stop of rotation.

Example 29: An apparatus comprising: a rectifier including an input interface configured to receive an input signal; a half-wave path configured to convert the input signal into a half-wave output; a low-pass filter (LPF); and a circuit connected between the rectifier and the LPF, wherein the circuit comprises a plurality of resistance paths, and the circuit is configured to: receive the half-wave output from the rectifier; and based on a current of the half-wave output, pass the half-wave output through one of the plurality of resistance paths.

Example 30: The apparatus of Example 29, wherein the circuit further comprises: a first switch being controlled by the current of the half-wave output from the rectifier; a resistor; and a second switch connected in parallel with the resistor, the second switch being controlled by a voltage at a node between a collector terminal of the first switch and a gate terminal of the second switch, wherein when the current of the half-wave output exceeds a predefined current threshold, the first switch is turned on to drive the voltage at the node to a voltage level that triggers a transition of the second switch from an on state to an off state.

Example 31: The apparatus of any one of Examples 29 and 30, wherein: when the second switch is fully turned on, the half-wave output is passed through a low-resistance path among the plurality of resistance paths; and when the second switch is fully turned off, the half-wave output is passed through a high-resistance path among the plurality of resistance paths.

Example 32: The apparatus of any one of Examples 29 to 31, wherein: when the second switch is fully turned on, the half-wave output is passed through a low-resistance path among the plurality of resistance paths; and when the second switch is partially turned on, the half-wave output is passed through a high-resistance path among the plurality of resistance paths.

Example 33: The apparatus of any one of Examples 29 to 32, wherein: when the second switch is fully turned on, the half-wave output is passed through a low-resistance path among the plurality of resistance paths; when the second switch is fully turned off, the half-wave output is passed through a high-resistance path among the plurality of resistance paths; and when the second switch is partially turned on, the half-wave output is passed through an intermediate resistance path among the plurality of resistance paths.

Example 34: The apparatus of any one of Examples 29 to 33, wherein the half-wave output is passed to an actuator circuit for controlling an actuated part in one of a first motion, a second motion and a third motion.

Example 35: The apparatus of any one of Examples 29 to 34, wherein: the actuated part is rotatable; the first motion is a first rotation direction; the second motion is a second rotation direction opposite from the first rotation direction; and the third motion is one of: the first rotation direction; the second rotation direction; and a stop of rotation.

Example 36: An apparatus comprising: a rectifier including an input interface configured to receive an input signal; a half-wave path configured to convert the input signal into a half-wave output; a low-pass filter (LPF); and a circuit connected between the rectifier and the LPF, wherein the circuit comprises a low-resistance path and a high-resistance path, and the circuit is configured to: receive the half-wave output from the rectifier; and based on a current of the half-wave output, pass the half-wave output through one of the low-resistance path and high-resistance path.

Example 37: The apparatus of Example 36, wherein the circuit further comprises: a first switch being controlled by the current of the half-wave output from the rectifier; a resistor; and a second switch connected in parallel with the resistor, the second switch being controlled by a voltage at a node between a collector terminal of the first switch and a gate terminal of the second switch, wherein when the current of the half-wave output exceeds a predefined current threshold, the first switch is turned on to drive the voltage at the node to a voltage level that triggers a transition of the second switch from an on state to an off state.

Example 38: The apparatus of any one of Examples and 37, wherein: when the second switch is fully turned on, the half-wave output is passed through the low-resistance path; and when the second switch is fully turned off, the half-wave output is passed through the high-resistance path.

Example 39: The apparatus of any one of Examples 36 to 38, wherein: when the second switch is fully turned on, the half-wave output is passed through the low-resistance path; and when the second switch is partially turned on, the half-wave output is passed through the high-resistance path.

Example 40: The apparatus of any one of Examples 36 to 39, wherein the half-wave output is passed to an actuator circuit for controlling an actuated part in one of a first motion, a second motion and a third motion.

Example 41: The apparatus of any one of Examples 36 to 40, wherein: the actuated part is rotatable; the first motion is a first rotation direction; the second motion is a second rotation direction opposite from the first rotation direction; and the third motion is one of: the first rotation direction; the second rotation direction; and a stop of rotation.

Example 42: An apparatus comprising: a rectifier comprising: a first input interface configured to receive a first input signal; a second input interface configured to receive a second input signal; a half-wave path configured to convert one of the first input signal and the second input signal into a half-wave output; a low-pass filter (LPF); and a circuit connected between the rectifier and the LPF, wherein the circuit comprises a low-resistance path and a high-resistance path, and the circuit is configured to: receive the half-wave output from the rectifier; and based on a current of the half-wave output, pass the half-wave output through one of the low-resistance path and high-resistance path.

Example 43: The apparatus of Example 42, wherein the first input signal and the second input signal are received alternately.

Example 44: The apparatus of any one of Examples 42 and 43, wherein the first input signal and the second input signal are received simultaneously.

Example 45: The apparatus of any one of Examples 42 to 44, wherein the circuit further comprises: a first switch being controlled by the current of the half-wave output from the rectifier; a resistor; and a second switch connected in parallel with the resistor, the second switch being controlled by a voltage at a node between a collector terminal of the first switch and a gate terminal of the second switch, wherein when the current of the half-wave output exceeds a predefined current threshold, the first switch is turned on to drive the voltage at the node to a voltage level that triggers a transition of the second switch from an on state to an off state.

Example 46: The apparatus of any one of Examples 42 to 45, wherein: when the second switch is fully turned on, the half-wave output is passed through the low-resistance path; and when the second switch is fully turned off, the half-wave output is passed through the high-resistance path.

Example 47: The apparatus of any one of Examples 42 to 46, wherein: when the second switch is fully turned on, the half-wave output is passed through the low-resistance path; and when the second switch is partially turned on, the half-wave output is passed through the high-resistance path.

Example 48: The apparatus of any one of Examples 42 to 47, wherein: the half-wave path is a first half-wave path configured to convert a positive voltage level of the one of the first input and the second input signal into the half-wave output; the half-wave output is a first half-wave output; the rectifier further comprises a second half-wave path configured to convert a negative voltage level of the one of the first input and the second input signal into a second half-wave output; the low-resistance path is a first low-resistance path; the high-resistance path is a first high-resistance path; and the circuit is configured to: receive the first half-wave output from the rectifier; receive the second half-wave output from the rectifier; based on a current of the first half-wave output, pass the first half-wave output through one of the first low-resistance path and the first high-resistance path; and based on a current of the second half-wave output, pass the second half-wave output through one of a second low-resistance path and a second high-resistance path.

Example 49: The apparatus of any one of Examples 42 to 48, further comprising a charge pump connected between the circuit and the LPF, wherein the charge pump is configured to raise an energy of a negative half-wave output, among the first and second half-wave outputs, to a positive potential.

Example 50: The apparatus of any one of Examples 42 to 49, wherein: the half-wave output is passed to an actuator circuit for controlling an actuated part; receipt of the first input signal at the first input interface indicates a control of the actuated part in a first motion; receipt of the second input signal at the second input interface indicates a control of the actuated part in a second motion; and receipt of the first input signal at the first input interface and receipt of the second input signal at the second input interface simultaneously indicates a control of the actuated part in a third motion.

Example 51: The apparatus of any one of Examples 42 to 50, wherein: the actuated part is rotatable; the first motion is a first rotation direction; the second motion is a second rotation direction opposite from the first rotation direction; and the third motion is one of: the first rotation direction; the second rotation direction; and a stop of rotation.

Example 52: A method of controlling a motor to drive an actuated part of a heating, ventilating, and air conditioning (HVAC) system, the method comprising: receiving a first input signal; receiving a second input signal; converting one of the first input signal and the second input signal into a half-wave output; and using current of the half-wave output to control a first switch for triggering a transition of a second switch from an on state to an off state, wherein a state of the second switch defines a path for limiting the current of the half-wave output with resistance that varies directly with the current of the half-wave output.

Example 53: The method of Example 52, wherein the first input signal and the second input signal are received alternately.

Example 54: The method of any one of Examples 52 and 53, wherein the first input signal and the second input signal are received simultaneously.

Example 55: The method of any one of Examples 52 to 54, wherein the second switch is connected in parallel with a resistor, and the method further comprises: using the current of the half-wave output to turn on the first switch for triggering the transition of the second switch from the on state to the off state to form a high-resistance path with the resistor for passing the half-wave output; and using the current of the half-wave output to turn off the first switch for triggering the transition of the second switch from the off state to the on state to form a low-resistance path with the resistor for passing the half-wave output.

Example 56: The method of any one of Examples 52 to 55, wherein: the transition of the second switch from the on state to the off state comprises transitioning from a fully on state to a fully off state; and the transition of the second switch from the off state to the on state comprises transitioning from a fully off state to a fully on state.

Example 57: The method of any one of Examples 52 to 56, wherein: the transition of the second switch from the on state to the off state comprises transitioning from a fully on state to a partially on state; and the transition of the second switch from the off state to the on state comprises transitioning from a partially on state to a fully on state.

Example 58: The method of any one of Examples 52 to 57, wherein: the transition of the second switch from the on state to the off state comprises at least one of: transitioning from a fully on state to a fully off state; and transitioning from a fully on state to a partially on state; the transition of the second switch from the off state to the on state comprises at least one of: transitioning from a fully off state to a fully on state; and transitioning from a partially on state to a fully on state.

Example 59: The method of any one of Examples 52 to 58, further comprising passing the half-wave output to an actuator circuit for controlling an actuated part, wherein: receipt of the first input signal indicates a control of the actuated part in a first motion; receipt of the second input signal indicates a control of the actuated part in a second motion; and receipt of the first input signal and receipt of the second input signal simultaneously indicates a control of the actuated part in a third motion.

Example 60: The method of any one of Examples 52 to 59, wherein: the actuated part is rotatable; the first motion is a first rotation direction; the second motion is a second rotation direction opposite from the first rotation direction; and the third motion is one of: the first rotation direction; the second rotation direction; and a stop of rotation.

Example 61: A method of controlling a motor to drive an actuated part of a heating, ventilating, and air conditioning (HVAC) system, the method comprising: receiving an input signal; converting the input signal into a half-wave output; and using current of the half-wave output to control a first switch for triggering a transition of a second switch from an on state to an off state, wherein a state of the second switch defines a path for limiting the current of the half-wave output with resistance that varies directly with the current of the half-wave output.

Example 62: The method of Example 61, wherein the second switch is connected in parallel with a resistor, and the method further comprises: using the current of the half-wave output to turn on the first switch for triggering the transition of the second switch from the on state to the off state to form a high-resistance path with the resistor for passing the half-wave output; and using the current of the half-wave output to turn off the first switch for triggering the transition of the second switch from the off state to the on state to form a low-resistance path with the resistor for passing the half-wave output.

Example 63: The method of any one of Examples 61 and 62, wherein: the transition of the second switch from the on state to the off state comprises transitioning from a fully on state to a fully off state; and the transition of the second switch from the off state to the on state comprises transitioning from a fully off state to a fully on state.

Example 64: The method of any one of Examples 61 to 63, wherein: the transition of the second switch from the on state to the off state comprises transitioning from a fully on state to a partially on state; and the transition of the second switch from the off state to the on state comprises transitioning from a partially on state to a fully on state.

Example 65: The method of any one of Examples 61 to 64, wherein: the transition of the second switch from the on state to the off state comprises at least one of: transitioning from a fully on state to a fully off state; and transitioning from a fully on state to a partially on state; the transition of the second switch from the off state to the on state comprises at least one of: transitioning from a fully off state to a fully on state; and transitioning from a partially on state to a fully on state.

Example 66: The method of any one of Examples 61 to 65, further comprising: passing the half-wave output to an actuator circuit for controlling an actuated part; and receiving, at the actuator circuit, a control signal that indicates a control of the actuated part in one of a first motion, a second motion and a third motion.

Example 67: The method of any one of Examples 61 to 66, wherein: the actuated part is rotatable; the first motion is a first rotation direction; the second motion is a second rotation direction opposite from the first rotation direction; and the third motion is one of: the first rotation direction; the second rotation direction; and a stop of rotation.

Example 68: An actuator device comprising: a motor; an actuator circuit configured to control the motor to drive an actuated part of a heating, ventilating, and air conditioning (HVAC) system; and a power supply configured to supply power to the actuator circuit, the power supply comprising: a rectifier comprising: a first input interface configured to receive a first input signal; a second input interface configured to receive a second input signal; a half-wave path configured to convert one of the first input signal and the second input signal into a half-wave output; a low-pass filter (LPF); and a circuit connected between the rectifier and the LPF, wherein the circuit comprises a low-resistance path and a high-resistance path, and the circuit is configured to: receive the half-wave output from the rectifier; and based on a current of the half-wave output, pass the half-wave output through one of the low-resistance path and high-resistance path.

Example 69: The actuator device of Example 68, wherein the first input signal and the second input signal are received alternately.

Example 70: The actuator device of any one of Examples 68 and 69, wherein the first input signal and the second input signal are received simultaneously.

Example 71: The actuator device of any one of Examples 68 to 70, wherein the circuit further comprises: a first switch being controlled by the current of the half-wave output from the rectifier; a resistor; and a second switch connected in parallel with the resistor, the second switch being controlled by a voltage at a node between a collector terminal of the first switch and a gate terminal of the second switch, wherein when the current of the half-wave output exceeds a predefined current threshold, the first switch is turned on to drive the voltage at the node to a voltage level that triggers a transition of the second switch from an on state to an off state.

Example 72: The actuator device of any one of Examples 68 to 71, wherein: when the second switch is fully turned on, the half-wave output is passed through the low-resistance path; and when the second switch is fully turned off, the half-wave output is passed through the high-resistance path.

Example 73: The actuator device of any one of Examples 68 to 72, wherein: when the second switch is fully turned on, the half-wave output is passed through the low-resistance path; and when the second switch is partially turned on, the half-wave output is passed through the high-resistance path.

Example 74: The actuator device of any one of Examples 68 to 73, wherein: the half-wave path is a first half-wave path configured to convert a positive voltage level of the one of the first input and the second input signal into the half-wave output; the half-wave output is a first half-wave output; the rectifier further comprises a second half-wave path configured to convert a negative voltage level of the one of the first input and the second input signal into a second half-wave output; the low-resistance path is a first low-resistance path; the high-resistance path is a first high-resistance path; and the circuit is configured to: receive the first half-wave output from the rectifier; receive the second half-wave output from the rectifier; based on a current of the first half-wave output, pass the first half-wave output through one of the first low-resistance path and the first high-resistance path; and based on a current of the second half-wave output, pass the second half-wave output through one of a second low-resistance path and a second high-resistance path.

Example 75: The actuator device of any one of Examples 68 to 74, further comprising a charge pump connected between the circuit and the LPF, wherein the charge pump is configured to raise an energy of a negative half-wave output, among the first and second half-wave outputs, to a positive potential.

Example 76: The actuator device of any one of Examples 68 to 75, wherein: the half-wave output is passed to an actuator circuit for controlling an actuated part; receipt of the first input signal at the first input interface indicates a control of the actuated part in a first motion; receipt of the second input signal at the second input interface indicates a control of the actuated part in a second motion; and receipt of the first input signal at the first input interface and receipt of the second input signal at the second input interface simultaneously indicates a control of the actuated part in a third motion.

Example 77: The actuator device of any one of Examples 68 to 76, wherein: the actuated part is rotatable; the first motion is a first rotation direction; the second motion is a second rotation direction opposite from the first rotation direction; and the third motion is one of: the first rotation direction; the second rotation direction; and a stop of rotation.

Example 78: An actuator device comprising: a motor; an actuator circuit configured to control the motor to drive an actuated part of a heating, ventilating, and air conditioning (HVAC) system; and a power supply configured to supply power to the actuator circuit, the power supply comprising: a rectifier including an input interface configured to receive an input signal; a half-wave path configured to convert the input signal into a half-wave output; a low-pass filter (LPF); and a circuit connected between the rectifier and the LPF, wherein the circuit comprises a low-resistance path and a high-resistance path, and the circuit is configured to: receive the half-wave output from the rectifier; and based on a current of the half-wave output, pass the half-wave output through one of the low-resistance path and high-resistance path.

Example 79: The actuator device of Example 78, wherein the circuit further comprises: a first switch being controlled by the current of the half-wave output from the rectifier; a resistor; and a second switch connected in parallel with the resistor, the second switch being controlled by a voltage at a node between a collector terminal of the first switch and a gate terminal of the second switch, wherein when the current of the half-wave output exceeds a predefined current threshold, the first switch is turned on to drive the voltage at the node to a voltage level that triggers a transition of the second switch from an on state to an off state.

Example 80: The actuator device of any one of Examples 78 and 79, wherein: when the second switch is fully turned on, the half-wave output is passed through the low-resistance path; and when the second switch is fully turned off, the half-wave output is passed through the high-resistance path.

Example 81: The actuator device of any one of Examples 78 to 80, wherein: when the second switch is fully turned on, the half-wave output is passed through the low-resistance path; and when the second switch is partially turned on, the half-wave output is passed through the high-resistance path.

Example 82: The actuator device of any one of Examples 78 to 81, wherein the half-wave output is passed to an actuator circuit for controlling an actuated part in one of a first motion, a second motion and a third motion.

Example 83: The actuator device of any one of Examples 78 to 82, wherein: the actuated part is rotatable; the first motion is a first rotation direction; the second motion is a second rotation direction opposite from the first rotation direction; and the third motion is one of: the first rotation direction; the second rotation direction; and a stop of rotation.

### Conclusion

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be implemented substantially concurrently, or the blocks may sometimes be implemented in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

The terminology used herein is for the purpose of describing particular embodiments only and is not intended to be limiting of this disclosure. As used herein, the singular forms "a," "an," and "the" are intended to include the plural forms as well, unless the context clearly indicates otherwise. It will be further understood that the terms "includes," "comprises," and/or "comprising," when used in this specification, specify the presence of stated features, integers, steps, operations, elements, and/or components, but do not preclude the presence or addition of one or more other features, integers, steps, operations, elements, components, and/or groups thereof. Further, the terms up, upper, down, lower, above, below, left, right, forward, rearward, and the like are intended to be understood in the context of the representations described and illustrated above so that a wearable device may have such an orientation in reference to the frame or to various elements as supported by the frame or as illustrated in the drawing figures.

The corresponding structures, materials, acts, and equivalents of all means or step plus function elements, if any, in the claims below are intended to include any structure, material, or act for performing the function in combination with other claimed elements as specifically claimed. The description of the present disclosure has been presented for purposes of illustration and description but is not intended to be exhaustive or limited to this disclosure in the form disclosed. Many modifications and variations will be apparent to those of ordinary skill in the art without departing from the scope and spirit of this disclosure. The various embodiments were chosen and described in order to best explain the principles of this disclosure and the practical application, and to enable others of ordinary skill in the art to understand this disclosure for various embodiments with various modifications as are suited to the particular use contemplated.

## Claims

1. An apparatus (102) comprising:
a rectifier (124) comprising at least one input interface configured to receive at least one input signal (204, 206);
at least one half-wave path configured to convert the at least one input signal (204, 206) into at least one half-wave output (214, 306);
a low-pass filter, LPF, (126); and
a circuit (120) connected between the rectifier (124) and the LPF (126),
wherein the circuit (120) comprises a plurality of resistance paths, and the circuit (120) is configured to:
receive the at least one half-wave output (214, 306) from the rectifier (124); and
based on a current of the at least one half-wave output (214, 306), pass the at least one half-wave output through one of the plurality of resistance paths.

2. The apparatus (102) of claim 1, wherein for at least one half-wave path, the circuit (120) further comprises:
a first switch (S1, S3) being controlled by the current of the half-wave output (214, 306) from the rectifier (124);
a resistor (R3, R7); and
a second switch (S2, S4) connected in parallel with the resistor (R3, R7), the second switch (S2, S4) being controlled by a voltage at a node (N1, N3) between a collector terminal of the first switch (S1, S3) and a gate terminal of the second switch (S2, S4), wherein when the current of the half-wave output (214, 306) exceeds a predefined current threshold, the first switch (S1, S3) is turned on to drive the voltage at the node (N1, N3) to a voltage level that triggers a transition of the second switch (S2, S4) from an on state to an off state.

3. The apparatus (102) of claim 2, wherein:
when the second switch (S2, S4) is fully turned on, the half-wave output (214, 306) is passed through a low-resistance path among the plurality of resistance paths;
when the second switch (S2, S4) is partially turned on, the half-wave output (214, 306) is passed through an intermediate resistance path among the plurality of resistance paths; and
when the second switch (S2, S4) is fully turned off, the half-wave output (214, 306) is passed through a high-resistance path among the plurality of resistance paths.

4. The apparatus (102) of claim 2 or 3, wherein the first switch (S1, S3) is a current-controlled device, such as a bipolar junction transistor, BJT, and the second switch (S2, S4) is a voltage-controlled device, such as a metal-oxide-semiconductor field-effect transistor, MOSFET.

5. The apparatus (102) of any one of claims 2 to 4, further comprising a Zener diode (D1, D2) configured to limit a gate-source voltage of the second switch (S2, S4).

6. The apparatus (102) of any one of claims 1 to 5, wherein: the at least one half-wave path comprises
a first half-wave path for a positive voltage level of the at least one input signal and
a second half-wave path for a negative voltage level of the at least one input signal; and the plurality of resistance paths comprises a first set of resistance paths for the first half-wave path and a second set of resistance paths for the second half-wave path.

7. The apparatus (102) of any one of claims 1 to 6, wherein the at least one input interface comprises:
a first input interface configured to receive a first input signal (204); and
a second input interface configured to receive a second input signal (206); and wherein the at least one half-wave path is configured to convert one of the first input signal (204) and the second input signal (206) into the at least one half-wave output (214, 306).

8. The apparatus (102) of claim 7, wherein the first input signal (204) and the second input signal (206) are received alternately.

9. The apparatus (102) of claim 7 or 8, wherein:
The at least one half-wave path is a first half-wave path configured to convert a positive voltage level of the one of the first input signal (204) and the second input signal (206) into a half-wave output (214);
the rectifier (124) further comprises a second half-wave path configured to convert a negative voltage level of the one of the first input signal (204) and the second input signal (206) into a second half-wave output (306);
the plurality of resistance paths comprises a first set of resistance paths and a second set of resistance paths; and
the circuit (120) is configured to:
receive the first half-wave output (214) from the rectifier (124);
receive the second half-wave output (306) from the rectifier (124);
based on a current of the first half-wave output (214), pass the first half-wave output (214) through one of the first set of resistance paths; and
based on a current of the second half-wave output (306), pass the second half-wave output (306) through one of the second set of resistance paths.

10. The apparatus (102) of claim 6 or 9, further comprising a charge pump (402) connected between the circuit (120) and the LPF (126), wherein the charge pump (402) is configured to raise an energy of a negative half-wave output, among the first and second half-wave outputs, to a positive potential.

11. An actuator device (103) comprising:
a motor (106);
an actuator circuit (104) configured to control the motor (106) to drive an actuated part (110) of a heating, ventilating, and air conditioning, HVAC, system (100); and
the apparatus (102) according to any of claims 1 to 10 configured to supply power to the actuator circuit (104).

12. The actuator device (103) according to claim 11, wherein the apparatus (102) is the apparatus (102) according to any of claims 7 to 9, and is configured to pass the half-wave output to the actuator circuit (104); and
wherein the actuator circuit (104) is configured to control the actuated part (110) to perform:
a first motion upon receipt of the first input signal (204) at the first input interface;
a second motion upon receipt of the second input signal (206) at the second input interface; and
a third motion upon simultaneous receipt of the first input signal (204) at the first input interface and the second input signal (206) at the second input interface.

13. The actuator device (103) of claim 12, wherein: the actuated part (110) is rotatable; the first motion is a first rotation direction; the second motion is a second rotation direction opposite from the first rotation direction; and the third motion is one of: the first rotation direction; the second rotation direction; and a stop of rotation.

14. A method of controlling a motor (106) to drive an actuated part (110), the method comprising: receiving at least one input signal (204, 206); converting the at least one input signal into at least one half-wave output (214, 306); and using a current of the at least one half-wave output to control a first switch (S1, S3) for triggering a transition of a second switch (S2, S4) from an on state to an off state, wherein a state of the second switch (S2, S4) defines one of a plurality of resistance paths for limiting the current of the at least one half-wave output (216, 306).

15. The method according to claim 14, wherein receiving the at least one input signal comprises receiving a first input signal (204) and a second input signal (206).
